# EUROPEAN PATENT SPECIFICATION

(11) **EP 4 540 156 B1**
(45) Date of publication and mention of the grant of the patent: **04.03.2026**
(21) Application number: 23738870.7
(22) Date of filing: 14.06.2023
(51) Int. Cl.: B65G 49/06, E06B 3/673

(54) **APPARATUS FOR UNLOADING INSULATING GLASS PANELS FROM A PRODUCTION LINE, PLANT COMPRISING SUCH AN APPARATUS AND PROCESS FOR UNLOADING INSULATING GLASS PANELS FROM A PRODUCTION LINE**
VORRICHTUNG ZUM ENTLADEN VON ISOLIERGLASSCHEIBEN AUS EINER PRODUKTIONSLINIE, ANLAGE MIT SOLCH EINER VORRICHTUNG UND VERFAHREN ZUM ENTLADEN VON ISOLIERGLASSCHEIBEN AUS EINER PRODUKTIONSLINIE
APPAREIL DE DÉCHARGEMENT DE PANNEAUX EN VERRE ISOLANT À PARTIR D'UNE CHAÎNE DE PRODUCTION, INSTALLATION COMPRENANT UN TEL APPAREIL ET PROCÉDÉ DE DÉCHARGEMENT DE PANNEAUX EN VERRE ISOLANT D'UNE CHAÎNE DE PRODUCTION

(30) Priority: 17.06.2022 IT 202200012881
(43) Date of publication of application: 23.04.2025
(73) Proprietor: Forel S.P.A. Unipersonale, 31056 Roncade, Treviso (IT)
(72) Inventor: VIANELLO, Fortunato, 31056 Roncade, TREVISO (IT); VIANELLO, Riccardo, 31056 Roncade, TREVISO (IT)
(74) Representative: Busana, Omar
(86) International application number: PCT/IB2023/056141
(87) International publication number: WO 2023/242760

(56) References cited:
- EP-A2- 2 460 971

## Description

### FIELD OF APPLICATION

The present invention relates to an apparatus for unloading insulating glass panels from a production line, a plant comprising such an apparatus, and a process for unloading insulating glass panels from a production line.

### BACKGROUND ART

Insulating glass commonly means the set of two or more facing glass sheets separated by a specific spacer so as to form one or more gaps, possibly filled with gas other than air, therebetween and to create, along the periphery, the housing for a sealing material.

As is known, highly automated insulating glass production lines generally consist of several machines in which the end ones consist of the following automatic machines: spacer profile applier to form the spacer frame; coupler, gas loader, press; and sealing machine. An example of an automated insulating glass production apparatus is disclosed in EP 2 460 971 A2.

The movement of the insulating glass panels (hereinafter also referred to as "panels") being processed occurs in vertical, or "almost vertical", position, the glass panels being generally placed at 6° with respect to the vertical direction.

At the end of the production process, the manufactured items are usually unloaded from the production line manually or by means of appropriate aids if the weight of the panels does not allow the operator(s) to perform the operation directly.

After being unloaded from the production line, the insulating glasses are placed in appropriate carriages or stands for the period of time required for the catalysis of the secondary sealant before being moved to the next production departments or shipped to customers.

Another operation usually required after the unloading from the production line is the reorganization of the panels according to the orders that generated the production thereof. Indeed, very often, in terms of line productivity and previous production process organization, it is convenient to consolidate the production of items belonging to different customer orders, for example as a function of the features of the glass to be used, the type and thickness of the spacer, or the type of secondary sealant. Therefore, at the end of production, the insulating glass belonging to the same customer order must be grouped together to be prepared for shipping.

It is highly advantageous to automate and computerize such a reorganization operation, as can easily be understood, in terms of labour cost reduction, operator safety, and production space occupation.

Another problem known to those skilled in the art occurs when a thermoplastic-type spacer is used. In this case, as long as the secondary sealant has not reached an adequate level of catalysis, the panel is not capable of withstanding mechanical stresses and could be deformed, resulting in a non-conformity of the required geometrical requirements. Such a feature results in the need to constantly support the glass sheets forming the panel.

Such a phenomenon is also common to other types of spacer, especially in the case of panels with three glass sheets, for which it is always convenient to adequately support both the outer glass sheets and the middle glass sheet. Indeed, when used with a rigid spacer, the primary butyl sealant also has the problem of the sliding of the glass sheet which is not adequately supported from the bottom.

Again, with reference to when a thermoplastic-type spacer is used, in the storage operations on stands inclined by a few degrees (generally from 4 to 6 degrees) with respect to the vertical direction, the practice of positioning several panels adjacent to one another must be avoided because the compression undergone by the first panels stored causes the unacceptable deformation thereof, with the obvious approaching of the glass sheets forming the panel.

For these reasons, there is a need to automate the unloading of the insulating glass panels from the production line, the storage and reorganization thereof, in order to group the items together based on the provisions of the respective customer order. Moreover, in the case of a thermoplastic spacer, it is advantageous to arrange each panel individually, avoiding the superposition with other panels, at least for the time required for the catalysis of the secondary sealant.

In the search for a possible solution to these needs, the prior art has thought to apply what is already being used for glass sheets which, after the cutting step, are to be sorted to the subsequent production lines, such as the insulating glass production lines, or the grinding and/or drilling lines, the tempering lines, etc. Such types of systems and machines are well known and described in several documents, for example, in US5511671A, where a system is described, which withdraws glass panels from a horizontal cutting line, orients them in a vertical direction, transfers them by means of a shuttle into storage modules in a reorganized manner, and then withdraws them and provides them to the subsequent production departments.

However, in addition to the obvious adaptation needs as a function of the different dimensions and weights involved, the use of already known systems for automating the movement, storage, and reorganization of the products after the insulating glass production line, has the problems described below.

In practice, the application of the secondary sealant cannot always be accurate to the point of preventing the support systems on which the insulating glass rests from coming into contact with the sealant that has not yet catalysed. As a result of an inadequate catalysis level being reached, the sealant, of any kind, is sticky and thus soils the parts designed to support from below and transport the insulating glass. Over time (generally, a few hours depending on the environmental conditions and the nature of the product used), the secondary sealant changes from the conventional consistency of a toothpaste to a much greater one with the ability to strongly adhere to the transport devices. The situation worsens as the production continues and subsequent small, but numerous, amounts of sealant settle on the transport means.

A solution to such a problem was suggested in EP 0 671 534 B1, where the application of a belt in the lower part of the insulating glass is described, in order to prevent the recently-applied sealant from coming into contact with the transport and support elements. Although such a solution is effective in terms of preserving the integrity of the support and transport systems, in certain cases it has the drawback of preventing the correct catalysis of the secondary sealant, especially for those materials which react with the moisture in the air. Also the use of permeable belts does not always avoid the slowing of the process either. Such risks are not accepted by insulating glass manufacturers and are tolerated even less by sealing material manufacturers: indeed, an incorrect use of catalysis jeopardizes the functionality and durability of the finished product. Moreover, the belt needs to be manually removed prior to the installation of the insulating glass, thus generating waste and an increase in production costs. Moreover, the width of the belt also needs to be calibrated according to the overall thickness of the insulating glass panel, making the automation complex due to the application thereof.

### OVERVIEW OF THE INVENTION

The need is thus felt to solve the drawbacks and limitations mentioned with reference to the prior art.

Therefore, the need is felt to provide an apparatus and process for unloading insulating glass panels from a production line, which allows making the step of unloading and transporting the panels more efficient once they have been assembled and sealed.

Moreover, the need is felt for an apparatus and process allowing a certain flexibility as for the management of production, freeing it from the several restrictions which must be currently considered, and a rational management of all steps downstream of the process up to the shipping or delivery to another department for subsequent processing.

Again, the need is felt to prevent injuries by increasing the automation of the operations and reducing the exposure of operators to risk.

Such needs are at least partially met by an apparatus for unloading insulating glass panels from a production line according to claim 1, a plant according to claim 21, and a process for unloading insulating glass panels from a production line according to claim 22.

### DESCRIPTION OF THE DRAWINGS

Further features and advantages of the present invention will be more comprehensible from the following description of preferred embodiments thereof, given by way of non-limiting examples, in which:
- Figure 1 diagrammatically shows an axonometric view of a possible embodiment of an apparatus according to the present invention;

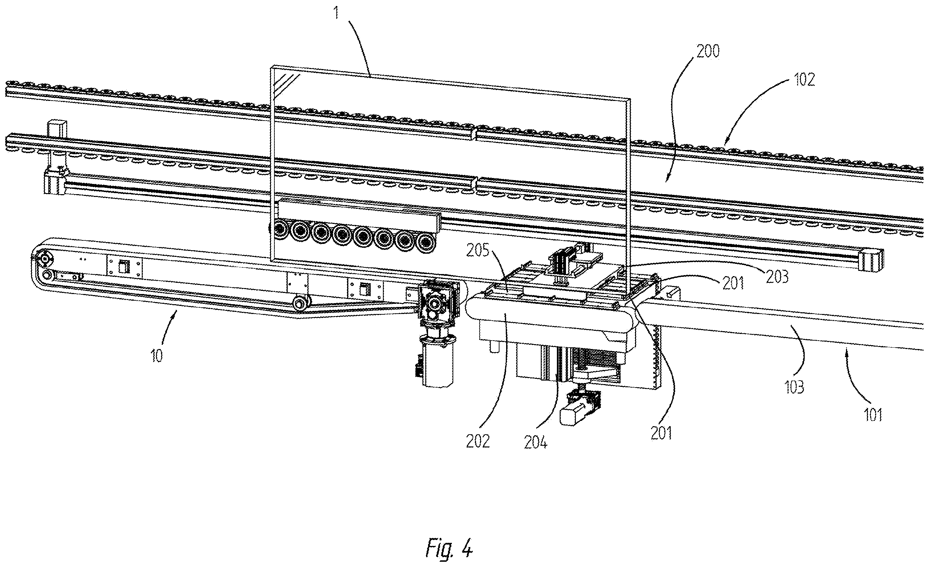

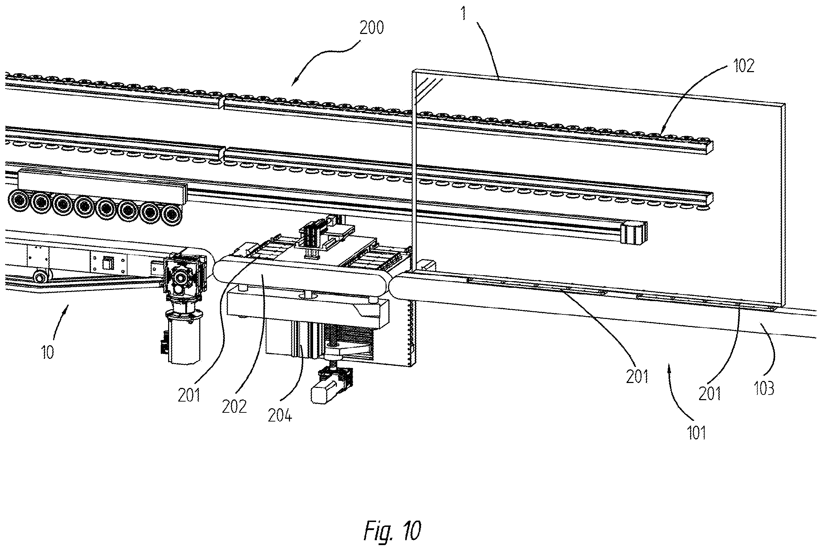

- Figures 2 to 10 each diagrammatically show a sequence of certain steps of a process according to a possible embodiment of the present invention;
- Figure 11 diagrammatically shows an axonometric view of a possible embodiment of a portion of the apparatus according to the present invention;

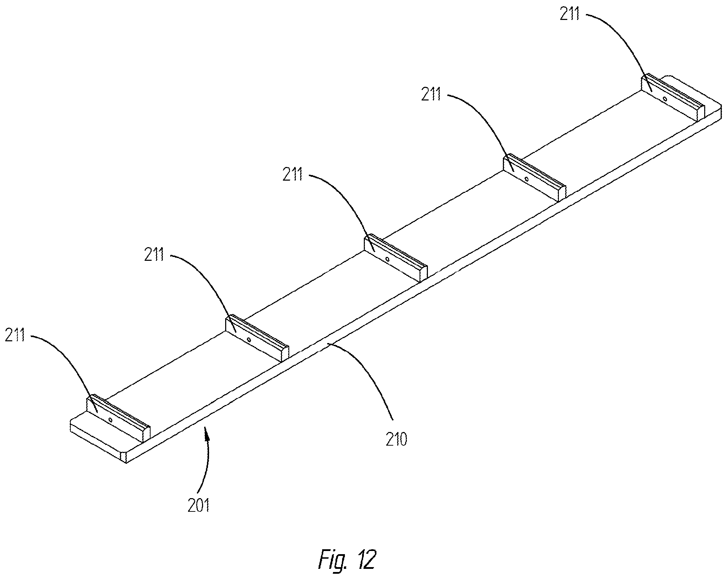

- Figure 12 diagrammatically shows an element of the apparatus according to a possible embodiment of the present invention;
- Figure 13 diagrammatically shows a side view of a portion of an apparatus according to a possible embodiment of the present invention;
- Figures 14 and 15 diagrammatically show a possible construction of a portion of apparatus according to a possible embodiment of the present invention; and
- Figure 16 diagrammatically shows a possible step of the process according to an embodiment of the present invention.
Elements or parts of elements common to the embodiments described below will be indicated by the same reference numerals.

### DETAILED DESCRIPTION

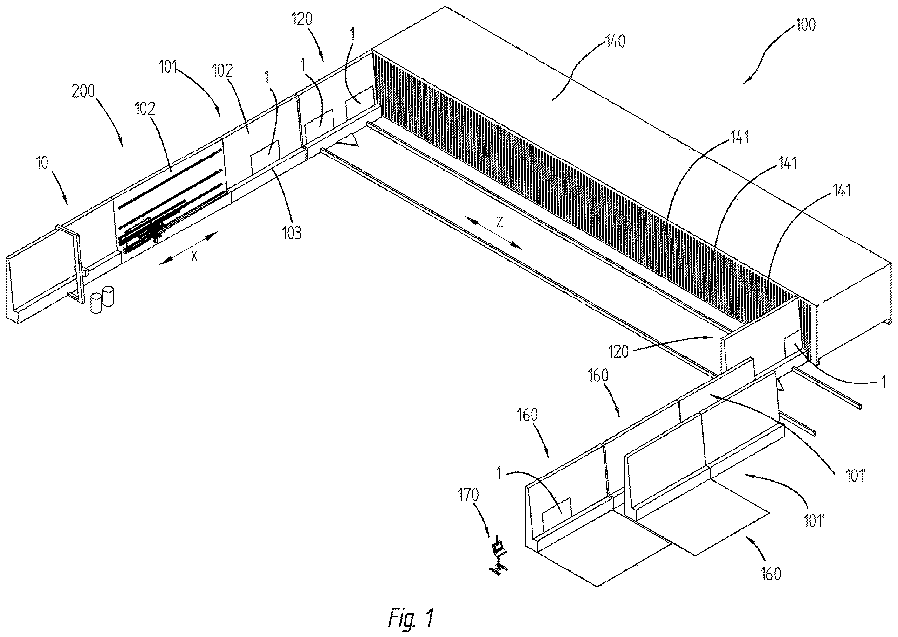

In figure 1 it is indicated by reference numeral 100 an apparatus for unloading insulating glass panels 1 from a production line 10.

The apparatus 100 can be used to unload the insulating glass 1 from the production line and to transport, store and reorganize it.

In essence, the apparatus comprises an insertion device 200 provided with a conveyor 202 adapted to transport insulating glass panels 1 according to a direction x from an entrance area close to a production line 10 to an exit area for said panels; and a vertical support structure 102 for keeping the insulating glass in an inclined position with respect to the vertical direction. The inclination can be of about 6°, for example.

The insertion device 200 comprises a positioning device 205 adapted to position rigid separating means 201 above said conveyor 202 so that they can be interposed between the insulating glass panels 1 and the conveyor 202.

According to a possible embodiment, the device 200 comprises handling means 204 for the conveyor 202 between a transport position for said panels and a lowered position with respect to the previous one, for inserting separating means 201 by means of the positioning device 205.

The handling means 204 can comprise an electric, electro-pneumatic, pneumatic, hydraulic and/or combined lift cylinder.

The solutions and details, such as the type of motorisation of the conveyors, for example, which are known to those skilled in the art, are not described in detail in order not to make the reading unnecessarily difficult.

According to a possible embodiment, the positioning device 205 can comprise:
- a support plate 212, on which a plurality of separating means 201 can be positioned side-by-side and substantially oriented parallel to the transit direction x of the panels 1; and
- a shaped upper plate 209 provided with at least one longitudinal seat 214 facing the support plate 212, adapted to contain at least partially at least one separating means 201, adapted to be moved:
   (a) closer to and farther from the support plate 212 to engage at least one separating means 201 on command; and
   (b) in a transverse direction above the support plate 212, to move the at least one separating means towards the conveyor 202.

The positioning device 205 can comprise actuating means 207, 208 which allow movements (a) and (b).

According to a possible embodiment, the insertion device 200 can comprise an automatic loader 203 adapted to automatically feed the positioning device 205.

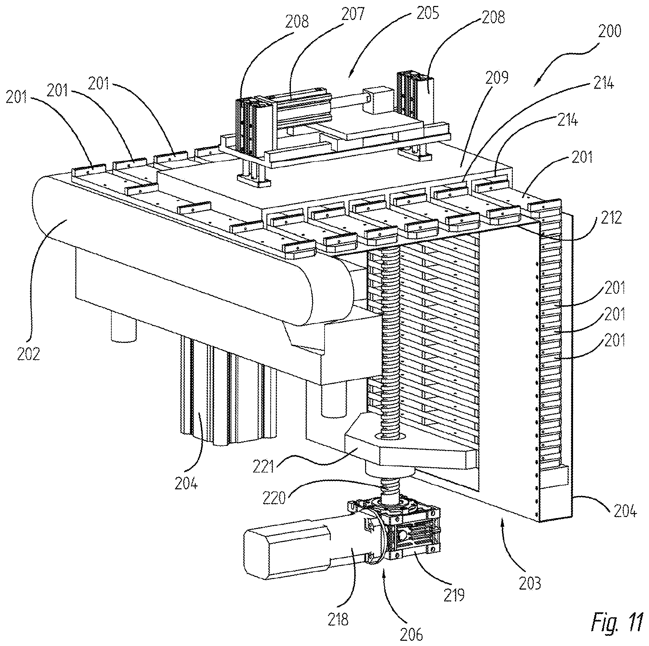

As shown in Figure 11, the automatic loader 203 can comprise handling means 206 comprising a motorisation 218 connected to a reducer 219 which drives a worm screw 220, adapted to move a loader support 221 on which separating means 201 can be stacked so that the stack of separating means 201 can be lifted to bring the next one to the height of the support plate 212 to be translated by the positioning device 205.

In the circumstance shown in Figure 11, the conveyor 202 is in the lowered position, ready to be lifted by cylinder 204 to the lifted position thereof and for inserting the separating means 201 between the insulating glass 1 and the conveyor 101 (not shown in this figure).

According to a possible embodiment, the vertical support structure 102 of the insertion device 200 comprises a carriage 300 with coupling means 303, preferably a plurality of suction cups. The travel of carriage 300 can extend upstream and downstream of the insertion device 200.

The apparatus 100 can comprise a storage module 140 for the insulating glass panels 1 coming from the insertion device 200, comprising a plurality of panel warehouses 141, arranged along a direction z, for example, but not necessarily, perpendicular to direction x.

According to a possible embodiment, the apparatus 100 can comprise:
- at least one conveyor 101 adapted to receive insulating glass panels 1 from the insertion device 200 and adapted to be moved according to a direction x;
- at least one shuttle 120 adapted to receive insulating glass panels 1 from the at least one conveyor 101 and serve the storage module 140, the at least one shuttle 120 being adapted to translate in front of the panel warehouses 141 along direction z; and
- at least one withdrawal conveyor 101' adapted to receive insulating glass panels 1 from the at least one shuttle 120.

The shuttles 120 can receive the insulating glass 1 from the conveyors 101 and can carry out the transverse transport along direction z to insert the insulating glass 1 into the storage module 140, or withdraw it therefrom to place it on one of the conveyors 101' towards the unloading area.

According to a possible embodiment, the apparatus 100 can comprise at least one unloading conveyor 160 comprising retaining means 400 for detaching the separating means 201 from the insulating glass panel 1 before removing it from conveyor 160.

The conveyors 160 are used for the operations of unloading the insulating glass 1 from system 100 and to arrange it on stands for shipping or whatever is provided for this purpose.

The unloading conveyor can comprise retaining means 400 provided with at least one parallel pneumatic gripper 402 adapted to actuate jaws 401 for retaining the separating means 201 when lifting the insulating glass panel 1, for the detachment from the separating means 201. In this way, after any cleaning and maintenance operations, the separating means 201 can be reused.

According to a possible embodiment, the separating means 201 can comprise a substantially rectangular elongated element 210 provided with support inserts 211 adapted to support at least one insulating glass panel 1.

Advantageously, the elongated element 210 can be made of a polymer material, preferably PVC (polyvinyl chloride), and/or the support inserts 211 can be made of a polymer material, preferably nitrile rubber (NBR).

The elongated element 210 can be made by coupling two different materials: a lower layer with a high friction coefficient, preferably nitrile rubber, the upper one made of non-stick material, preferably Teflon; even more preferably, an insert can be interposed between the two layers of material, which is adapted to give the separating means 201 the necessary mechanical stiffness features.

The apparatus (100) can comprise side wheels 105, 106 for laterally guiding the separating means 201 when transiting on the conveyors 101, 101', 160.

According to a possible embodiment, the apparatus 100 can comprise means (not shown) for applying a non-stick substance at said separating means 201, in particular at said support inserts 211, prior to the use thereof.

According to a possible embodiment, the apparatus 100 can comprise a programmable control unit 170 operatively connected to the drives of apparatus 100 for the management of the movements of the components thereof.

The control unit 170 can be used to manage all system operations to ensure the adequate residence time period of the insulating glass 1 in the storage module 140 in order to respect the catalysis or curing times of the sealing products prior to shipping and to reorganize them based on the customer orders being shipped.

The present invention further relates to a plant comprising an insulating glass production line 10 and an apparatus for unloading insulating glass panels 1 as described above.

The process for unloading insulating glass 1 from a production line 10 comprises the steps of:
(a) providing an apparatus for unloading insulating glass panels from a production line as described above;
(b) positioning a separating means 201 above the conveyor 202;
(c) advancing the insulating glass 1 above the separating means 201; and
(d) advancing the insulating glass 1 supported by at least one separating means towards the conveyors 101.

According to a possible embodiment, the process comprises:
- a step (b') before step (b), in which the conveyor 202 is positioned in the lowered insertion position of said separating means 201; and
- a step (c') after step (c), in which the conveyor 202 is lifted to the transport position thereof up to bringing the separating means 201 into contact with the lower part of the insulating glass panel 1.

According to a possible embodiment, the insulating glass panel is supported by the coupling means 303 of carriage 300 during the transit of the insulating glass panel 1 on conveyor 202.

Advantageously, at least one further separating means 201 can be inserted between the conveyor 202 and the insulating glass 1, through the repetition of steps (b) and (c), and possibly also of steps (b') and (c'). The process can comprise a step of applying a non-stick substance to the separating means 201. In this way, maintenance and cleaning of the separating means 201 can be facilitated. Generally, such substances are in liquid form, therefore they can be easily sprayed or applied by contact with appropriate sponges previously soaked.

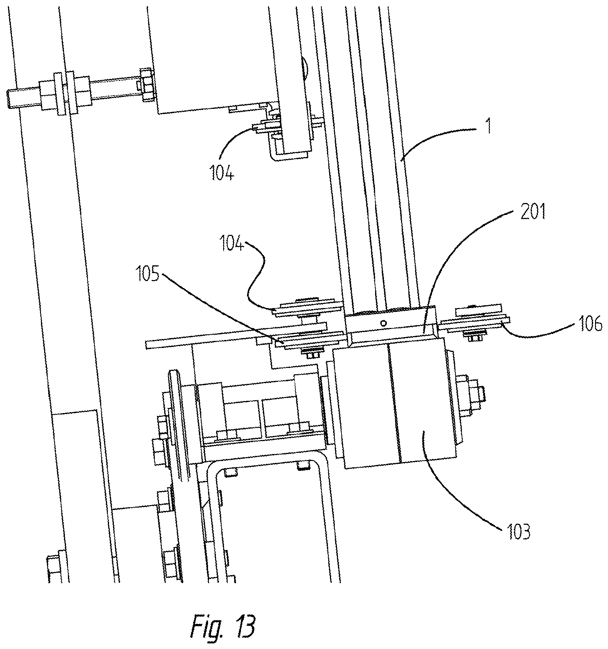

Figure 13 shows a side view of a detail of the conveyors 101 or 101'. When transiting on conveyor 101, the insulating glass 1 is supported on the vertical plane by the vertical structure 102 by means of wheels 104. Two other series of wheels, 105 and 106, referred to as the inner and outer wheels, respectively, laterally guide and allow the separating means 201 to be kept in the correct position during the movement along the conveyors 101 and 101' and in the storage module 140.

As shown in the description above, the separating means 201 remain(s) matched with the insulating glass during all the movements required in system 100 and transmit, by friction, the motion they receive from the conveyors of system 100 to the insulating glass 1. Thereby, the secondary sealant, in the non-catalysed or unhardened and sticky state, does not come into contact with the movement members, but only with the separating means. The separating means 201 are removed only after the stop in the storage module 140 for the time required to make the sealant non-soiling for the transport members.

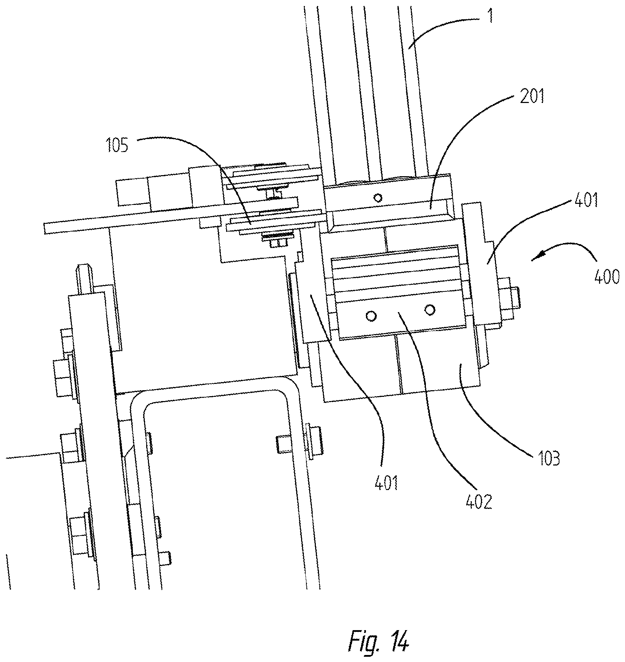

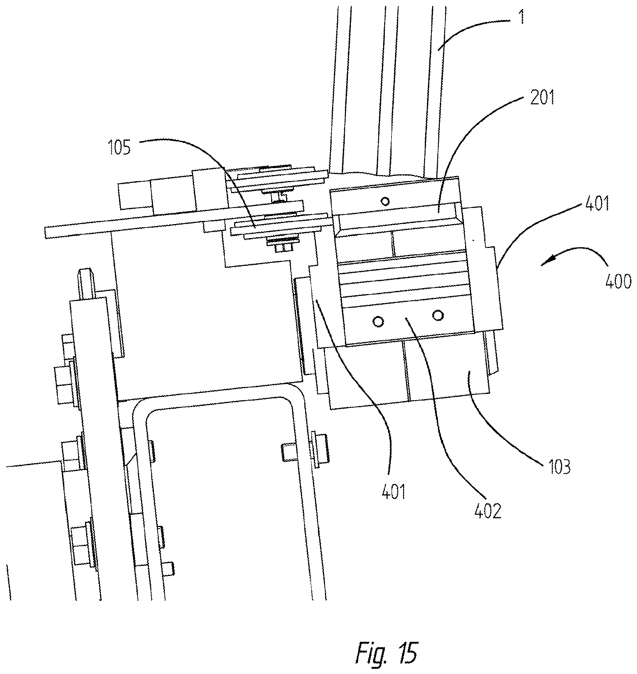

Figure 14 shows a side view of the retaining device 400 for the detachment of the insulating glass 1 from the separating means 201. These devices are arranged at the unloading conveyors 160, i.e., where the insulating glass joins the secondary sealant conveniently catalysed and/or hardened and thus made non-soiling. Specifically, in Figure 14, the transport kinematic system 103 consists of cylindrical rollers. Such a configuration allows the retaining device 400 to be accommodated in the gap between one roller and the next one. The insulating glass 1 rests, with the lower edge thereof, on the separating means 201, which in turn rests on the transport kinematic system 103. A parallel pneumatic gripper 402 actuates the jaws 401, which are shown in open position in Figure 14. In Figure 15, said jaws 401 are in closed position to retain the separating means 201. At this point, the insulating glass 1 can be lifted to achieve the detachment from the separating means 201. It can be convenient, prior to lifting, to rotate the insulating glass 1 about the lower corner thereof (operator side), as shown in Figure 15.

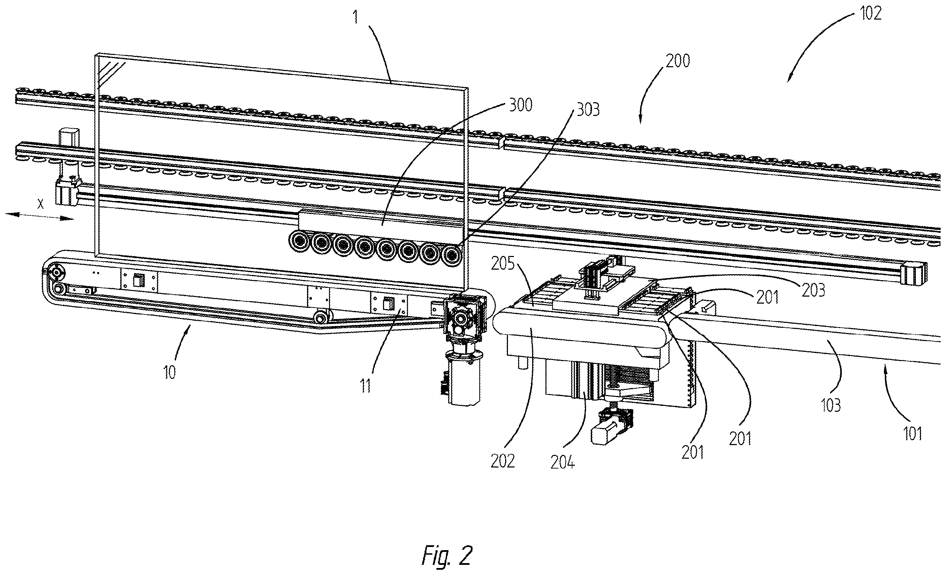

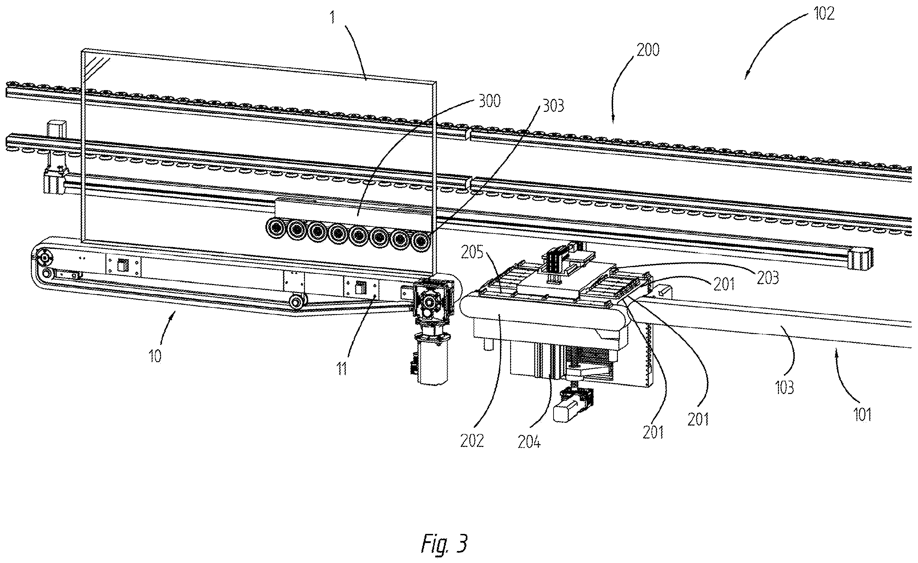

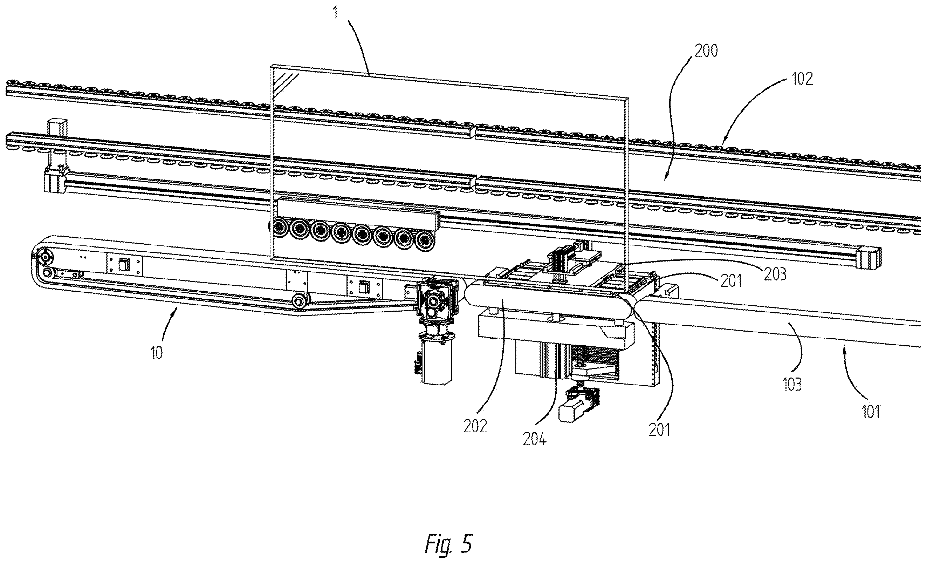

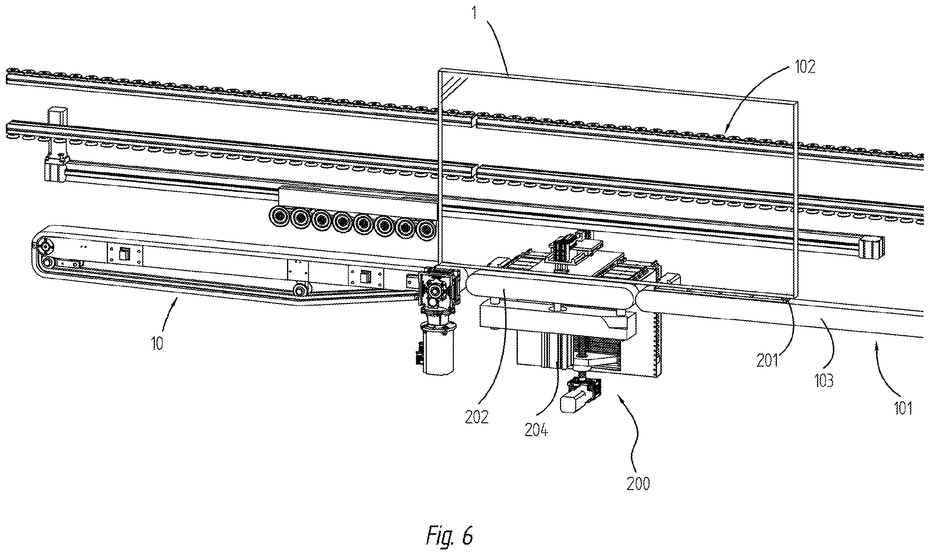

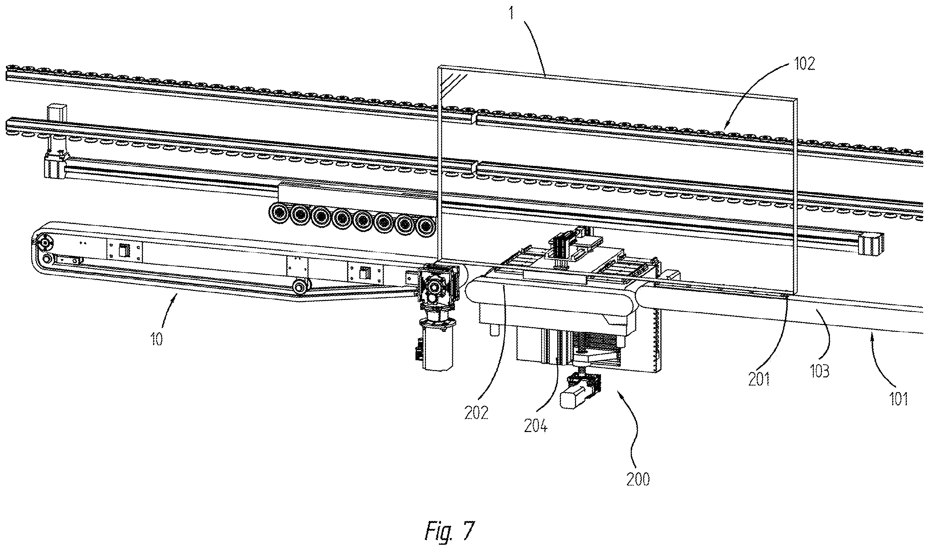

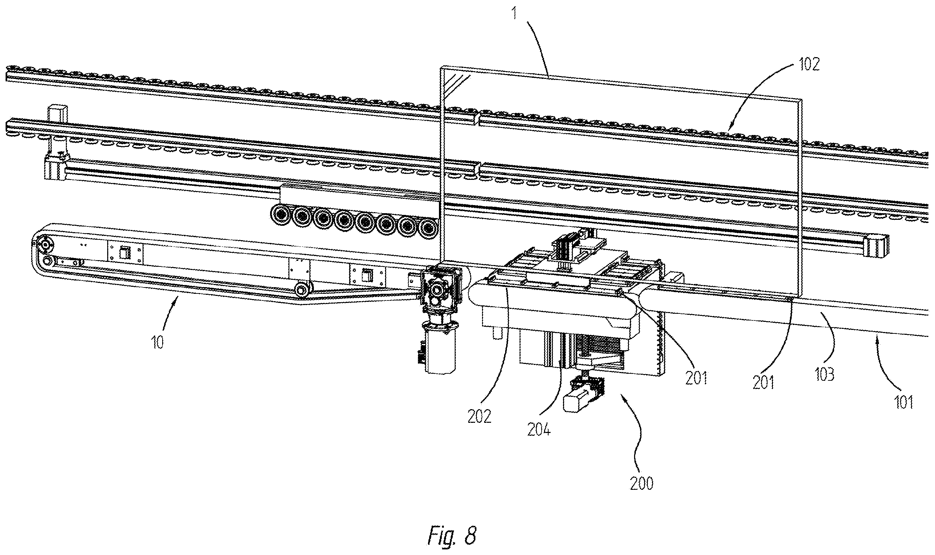

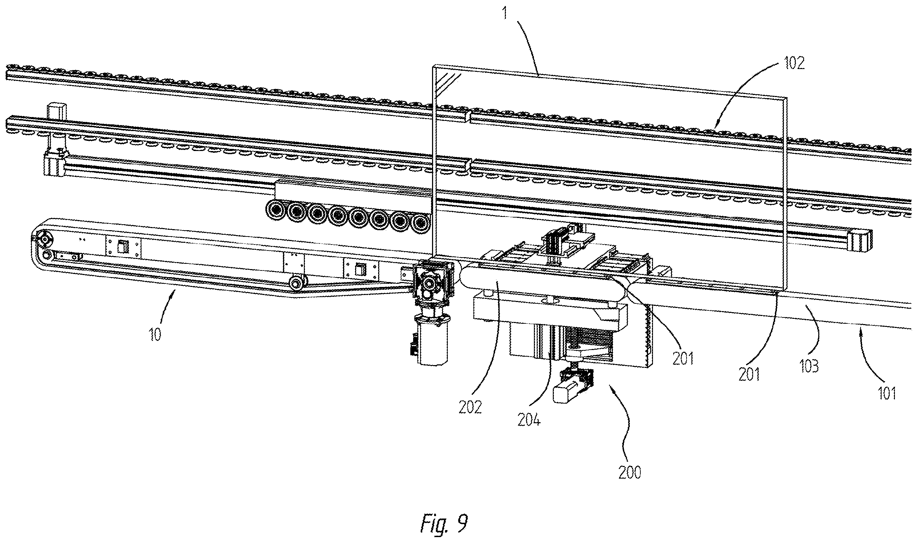

According to a possible embodiment, the process for unloading the insulating glass 1 from the production line 10, and for the operations of transporting, storing, and reorganizing it performed by the automated system 100, can comprise the steps of:
- positioning the insulating glass 1 on the conveyor 11 at the outlet of the end part 10 of the production line (Figure 2);
- positioning the conveyor 202 in the lowered position thereof (Figure 2);
- positioning a separating means 201 above the conveyor 202 (Figure 3);
- advancing, by actuating the conveyor 11 of the insulating glass 1, partially above the conveyor 202;
- lifting the conveyor 202 to the lifted position thereof up to bringing the separating means 201 into contact with the lower part of the insulating glass 1 (Figure 5);
- advancing the insulating glass 1 to place it partially above the conveyor 101 (Figure 6). Such a step is carried out by the coordinated actuation of the conveyors 11, 202 and 101;
- lowering the conveyor 202 up to the lowered position thereof (Figure 7);
- inserting a further separating means 201 above the conveyor 202 (Figure 8);
- lifting the conveyor 202 again to the lifted position thereof up to bringing the separating means 201 into contact with the lower part of the insulating glass 1 (Figure 9);
- advancing the insulating glass 1 by the coordinated actuation of conveyor 202 and conveyor 101;
- continuing the transport of the insulating glass 1 towards the subsequent conveyors 101 and loading, by means of the shuttle 120, onto a free compartment of the storage module 140;
- managing the standby time of the insulating glass 1 in the storage module for reaching the conditions required for the subsequent movement, packaging, and shipment steps;
- possible subsequent movement operations of the insulating glass 1 by the shuttle(s) 120 in order to reorganize the insulating glass 1 in the storage module 140;
- withdrawing the insulating glass 1 from the storage module 140 and transporting it to the conveyor(s) 101';
- releasing the insulating glass 1 onto the conveyor(s) 160 for the manual or automated unloading and packaging operations.

The sequence described above can also be modified, for example, by advancing the insulating glass 1 while the positioning device 205 places the separating means on the conveyor 202.

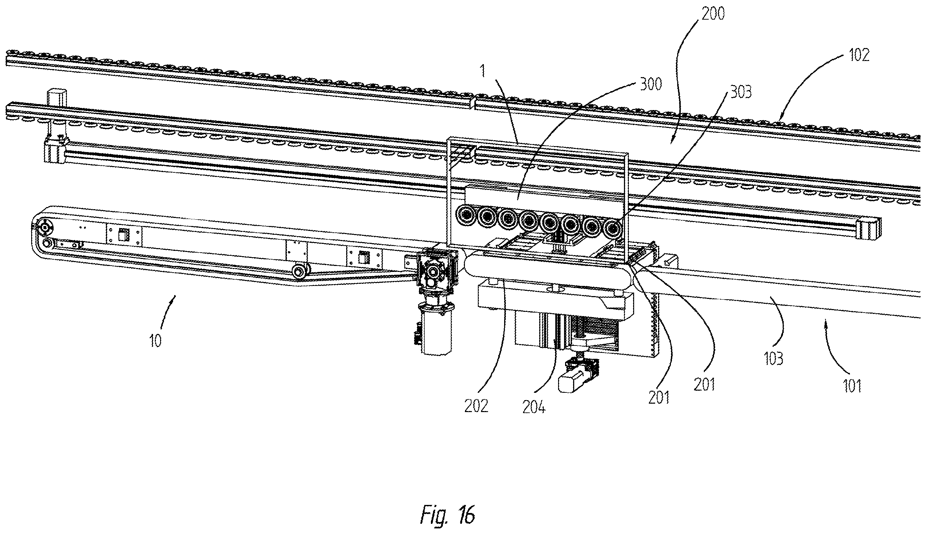

Since the control unit 170 has all the geometry and composition data of the insulating glass 1 in transit, it is capable of calculating the position of the centre of gravity thereof and accordingly, based also on the length thereof, the dimensions of conveyor 202, and the distance between conveyor 11 and conveyor 101, can assess the risk that the insulating glass 1 is not properly supported by the conveyors 11 and 101 in all the transit steps on the conveyor 202. If such a risk is assessed, as shown in Figure 16, before the insulating glass 1 transits on the conveyor 202, it can be coupled by the coupling means 303 of carriage 300 and supported thereby during all the steps of the process.

Likewise, since the length of the insulating glass is known, the control unit 170 can be capable of determining if a single separating means alone is sufficient or if it is necessary, as occurs in most cases, to insert more than one separating means between the conveyors 101 and the insulating glass 1.

The case can occur in which the separating means 201 protrude(s) at the head or tail, past the length of the insulating glass 1: the control unit 170 can manage the movements of such an insulating glass 1 by taking such information into account.

The positioning of the separating means 201 with respect to the insulating glass 1 can also be determined by the control unit 170 to minimize the bending and cutting stresses to which the insulating glass 1 is subjected during the movements.

Moreover, again through the available information, the control unit 170 can be capable of determining the time required for each insulating glass to reach the condition to be unloaded by system 100, to be made available for the subsequent steps of the production process or for shipping. Such a time interval indeed depends on the type of spacer and sealants used, on environmental conditions such as moisture and temperature, and on the amount of sealants used. This functionality allows optimizing the crossing time of each insulating glass 1 or each order comprising several pieces of insulating glass 1 in order to make the whole logistics management more efficient and reduce production costs.

Advantageously, in a possible alternative embodiment, more than one automatic loader 203 and more than one positioning device 205 can be used, each dedicated to a different type of separating means, for example for different lengths. The control unit 170 can thus decide which size of separating means 201 to use according to the dimensions of the insulating glass in transit. Different materials can also be used to manufacture the separating means 201 so that the most appropriate one can be used again as a function of the features of the insulating glass 1. There are several possible configurations for the arrangement of more than one automatic loader 203 and more than one positioning device 205 known to those skilled in the art such as the arrangement in series using further conveyors 202, or in parallel arranged over several planes so as to use a single conveyor 202, however provided with several positioning heights, one for each positioning device 205.

As is known to those skilled in the art, like for the movement, storage and reorganization systems of the individual glass sheets which are well known and have been applied for years, several configurations are also possible for the system 100 described, which stand out from one another for size, amount of shuttles 120 used, amount of storage modules 140, etc. It can be said that such types of systems are defined based on the specific needs of each individual end customer, the features thereof being dependent, for example, on the available space, type of products, production capacity, etc.

The present invention is susceptible to several constructional variants, all falling within the scope of the equivalence with the inventive concept, such that, for example and in particular, the mechanical solutions implemented for the conveyors 101, 101', 160 and 202 can be of the belt or roller type, moved by different types of kinematic systems known to those skilled in the art, as well as the wheels 104 used to support the insulating glass 1 in an almost vertical position can be replaced by air cushion systems, the length of the separating means can vary again based on the specific needs of the customer, the means for actuating the various movements can be electric, electric-electronic, pneumatic, hydraulic, and/or combined, etc.

In order to meet specific needs, those skilled in the art may make changes to the embodiments described above or replace the elements described with equivalent elements without departing from the scope of the appended claims.

## Claims

1. Apparatus (100) for unloading insulating glass panels (1) from a production line (10) comprising an insertion device (200) arranged with a conveyor (202) adapted to transport insulating glass panels (1) according to a direction (x) from an entrance area near a production line (10) to an exit area for said panels; and a vertical support structure (102) for keeping the insulating glass in an inclined position with respect to the vertical direction;
wherein in said insertion device (200), separating means (201) are positioned above said conveyor (202), so that they can be interposed between said insulating glass panels (1) and said conveyor (202).

2. Apparatus (100) according to the preceding claim, **characterised in that** it comprises a positioning device (205) adapted to position said separating means (201) above said conveyor (202).

3. Apparatus (100) according to the preceding claim, **characterised in that** said device (200) comprises handling means (204) for said conveyor (202) between a transport position for said panels and a lowered position with respect to the previous one, for inserting said separating means (201) by means of said positioning device (205).

4. Apparatus (100) according to the preceding claim, **characterised in that** said handling means (204) comprise an electric, electro-pneumatic, pneumatic, hydraulic and/or combined lift cylinder.

5. Apparatus (100) according to any one of claims 2-4, **characterized in that** said positioning device (205) comprises:
- a support plate (212), on which a plurality of separating means (201) can be positioned side by side and substantially oriented parallel to the transit direction (x) of said panels (1); and
- a shaped upper plate (209) arranged with at least one longitudinal seat (214) facing said support plate (212), adapted to at least partially contain at least one separating means (201), said shaped upper plate (209) being adapted to be moved:
(a) closer to and farther from said support plate (212) to engage at least one separating means (201) on command; and
(b) in a transverse direction above said support plate (212), to move said at least one separating means towards said conveyor (202).

6. Apparatus (100) according to the preceding claim, **characterised in that** said positioning device (205) comprises actuating means (207, 208) which allow the movements (a) and (b).

7. Apparatus (100) according to any one of claims 2-6, **characterised in that** said insertion device (200) comprises an automatic loader (203) adapted to automatically feed the positioning device (205).

8. Apparatus (100) according to the preceding claim, **characterised in that** said automatic loader (203) comprises handling means (206) comprising a motorisation (218) connected to a reducer (219) which drives a worm screw (220), adapted to move a support of the loader (221) on which separating means (201) can be stacked, so that the stack of separating means (201) can be lifted to bring the next one to the height of the support plate (212) to be translated by the positioning device (205).

9. Apparatus (100) according to any one of the preceding claims, **characterised in that** said vertical support structure (102) of said insertion device (200) comprises a carriage (300) with coupling means (303), preferably a plurality of suction cups.

10. Apparatus (100) according to any one of the preceding claims, **characterised in that** it comprises a storage module (140) for said insulating glass panels (1) coming from said insertion device (200) comprising a plurality of panel warehouses (141), arranged along a direction (z) substantially perpendicular to said direction (x).

11. Apparatus (100) according to the preceding claim, **characterized in that** it comprises:
- at least one conveyor (101) adapted to receive insulating glass panels (1) from said insertion device (200), and adapted to be moved according to a direction (x);
- at least one shuttle (120) adapted to receive insulating glass panels (1) from said at least one conveyor (101) and serve said storage module (140), said at least one shuttle (120) being adapted to translate in front of said panel warehouses (141) along the direction (z); and
- at least one withdrawal conveyor (101') adapted to receive insulating glass panels (1) from said at least one shuttle (120).

12. Apparatus (100) according to any one of the preceding claims, **characterised in that** it comprises at least one unloading conveyor (160) comprising retaining means (400) for detaching the separating means (201) from the insulating glass panel (1) before the removal thereof from the conveyor (160).

13. Apparatus (100) according to the preceding claim, **characterised in that** said retaining means (400) comprise at least one parallel pneumatic gripper (402) adapted to actuate jaws (401) to retain the separating means (201) during the lifting of the insulating glass panel (1) from the separating means (201).

14. Apparatus (100) according to any one of the preceding claims, **characterized in that** said separating means (201) comprise a substantially rigid element adapted to be reused.

15. Apparatus (100) according to any one of the preceding claims, **characterised in that** said separating means (201) comprise a substantially rectangular elongated element (210) arranged with support inserts (211) adapted to support at least one insulating glass panel (1).

16. Apparatus (100) according to the preceding claim, **characterised in that** said elongated element (210) is made of polymeric material, preferably PVC (polyvinyl chloride), and/or said support inserts (211) are made of polymeric material, preferably nitrile rubber (NBR).

17. Apparatus (100) according to claim 15, **characterised in that** said elongated element (210) is made by coupling two different materials: a lower layer with a high friction coefficient, preferably nitrile rubber, the upper one in non-stick material, preferably teflon, even more preferably an insert is interposed between the two layers of material which is adapted to confer the necessary mechanical stiffness features to the separating means (201).

18. Apparatus (100) according to any one of the preceding claims, **characterised in that** it comprises side wheels (105, 106) for the lateral guidance of the separating means (201) during transit on the conveyors (101, 101', 160).

19. Apparatus (100) according to any one of the preceding claims, **characterised in that** it comprises means for the application of a non-stick substance at said separating means (201) before they are used.

20. Apparatus (100) according to any one of the preceding claims **characterised in that** it comprises a programmable control unit (170), operatively connected to the drives of the apparatus (100) for the management of the movements of the relative components.

21. Plant comprising a production line (10) of insulating glass (1) and an apparatus (100) for unloading insulating glass panels (1) from a production line (10) according to any one of the preceding claims.

22. Process for unloading insulating glass (1) from a production line (10), comprising the steps of:
(a) providing an apparatus for unloading insulating glass panels from a production line according to any one of claims 1-18;
(b) positioning a separating means (201) above said conveyor (202);
(c) advancing the insulating glass (1) above the separating means (201); and
(d) advancing the insulating glass (1) supported by at least one separating means towards the conveyors (101).

23. Process for unloading insulating glass panels (1) from a production line (10), according to the preceding claim, **characterised in that** it comprises:
- a step (b') before step (b) in which the conveyor (202) is positioned in the lowered insertion position of said separating means (201); and
- a step (c') after step (c), in which the conveyor 202 is lifted to its transport position until the separating means (201) are brought into contact with the lower part of the insulating glass panel (1).

24. Process for unloading insulating glass panels (1) from a production line (10) according to any one of claims 22-23, **characterised in that** during the transit of the insulating glass panel (1) on the conveyor (202), the insulating glass panel is supported by the coupling means (303) of the carriage (300).

25. Process for unloading insulating glass panels (1) from a production line (10) according to any one of claims 22-24, **characterised in that** at least one further separating means (201) is inserted between the conveyor (202) and the insulating glass (1), through the repetition of steps (b) and (c), and possibly also of steps (b') and (c').

26. Process for unloading insulating glass panels (1) from a production line (10) according to any one of claims 22-25, **characterised in that** it comprises a step of applying a non-stick substance on the separating means (201).

27. Process for unloading insulating glass panels (1) from a production line (10) according to any one of claims 22-26, **characterised in that** it comprises a step of rearranging the insulating glass panels (1) according to specific needs.

28. Process for unloading insulating glass panels (1) from a production line (10) according to any one of claims 22-27, **characterised in that** it comprises a step in which the insulating glass panels (1) remain in said storage module (140) until the panels are ready for the subsequent steps and/or for shipping.

## Patentansprüche

1. Vorrichtung (100) zum Entladen von Isolierglasscheiben (1) aus einer Produktionslinie (10), umfassend eine Einfügungsvorrichtung (200), die mit einem Förderer (202) versehen ist, der eingerichtet ist, Isolierglasscheiben (1) nach einer Richtung (x) von einem Eingangsbereich in der Nähe einer Produktionslinie (10) zu einem Ausgangsbereich für die Scheiben zu transportieren; und eine vertikale Stützstruktur (102), zum Halten des Isolierglases in einer Position, die gegenüber der Vertikalrichtung geneigt ist;
wobei in der Einfügungsvorrichtung (200) Trennmittel (201) oberhalb des Förderers (202) angeordnet sind, sodass sie zwischen die Isolierglasscheiben (1) und den Förderer (202) angeordnet werden können.

2. Vorrichtung (100) nach dem vorhergehenden Anspruch, **dadurch gekennzeichnet, dass** sie eine Positioniervorrichtung (205) umfasst, die eingerichtet ist, die Trennmittel (201) oberhalb des Förderers (202) zu positionieren.

3. Vorrichtung (100) nach dem vorhergehenden Anspruch, **dadurch gekennzeichnet, dass** die Vorrichtung (200) Handhabungsmittel (204) für den Förderer (202) umfasst, zwischen einer Transportstellung für die Scheiben und einer gegenüber der vorherigen abgesenkten Stellung zum Einführen der Trennmittel (201) mittels der Positioniervorrichtung (205).

4. Vorrichtung (100) nach dem vorhergehenden Anspruch, **dadurch gekennzeichnet, dass** die Handhabungsmittel (204) einen elektrischen, elektropneumatischen, pneumatischen, hydraulischen und/oder kombinierten Hubzylinder umfassen.

5. Vorrichtung (100) nach einem der Ansprüche 2 bis 4, **dadurch gekennzeichnet, dass** die Positioniervorrichtung (205) umfasst:
eine Trägerplatte (212), auf der eine Mehrzahl von Trennmitteln (201) nebeneinander positioniert werden kann und die im Wesentlichen parallel zu der Durchgangsrichtung (x) der Scheiben (1) ausgerichtet sind; und
- eine geformte Oberplatte (209), die mit mindestens einem Längssitz (214) angeordnet ist, der der Trägerplatte (212) zugewandt ist und eingerichtet ist, mindestens ein Trennmittel (201) mindestens teilweise aufzunehmen, wobei die geformte Oberplatte (209) eingerichtet ist, wie folgt bewegt zu werden:
(a) näher an die und mehr weg von der Trägerplatte (212), um mindestens ein Trennmittel (201) auf Befehl in Eingriff zu bringen; und
(b) in einer Querrichtung oberhalb der Trägerplatte (212), um das mindestens eine Trennmittel zu dem Förderer (202) zu bewegen.

6. Vorrichtung (100) nach dem vorhergehenden Anspruch, **dadurch gekennzeichnet, dass** die Positioniervorrichtung (205) Betätigungsmittel (207, 208) umfasst, die die Bewegungen (a) und (b) ermöglichen.

7. Vorrichtung (100) nach einem der Ansprüche 2 bis 6, **dadurch gekennzeichnet, dass** die Einfügungsvorrichtung (200) ein automatisches Ladegerät (203) umfasst, das eingerichtet ist, die Positioniervorrichtung (205) automatisch zu beschicken.

8. Vorrichtung (100) nach dem vorhergehenden Anspruch, **dadurch gekennzeichnet, dass** das automatische Ladegerät (203) Handhabungsmittel (206) umfasst, die eine Motorisierung (218) umfassen, die mit einem Untersetzungsgetriebe (219) verbunden ist, der eine Schnecke (220) antreibt, die eingerichtet ist, einen Träger des Ladegerätes (221) zu bewegen, auf dem Trennmittel (201) gestapelt werden können, sodass der Stapel von Trennmitteln (201) angehoben werden kann, um das nächste auf die Höhe der Trägerplatte (212) zu bringen, die durch die Positioniervorrichtung (205) verschoben werden kann.

9. Vorrichtung (100) nach einem der vorhergehenden Ansprüche, **dadurch gekennzeichnet, dass** die vertikale Stützstruktur (102) der Einfügungsvorrichtung (200) einen Wagen (300) mit Kupplungsmitteln (303), vorzugsweise eine Mehrzahl von Saugnäpfen, umfasst.

10. Vorrichtung (100) nach einem der vorhergehenden Ansprüche, **dadurch gekennzeichnet, dass** sie ein Speichermodul (140) für die Isolierglasscheiben (1) umfasst, die aus der Einfügungsvorrichtung (200) kommen, umfassend eine Mehrzahl von Scheibenmagazinen (141), die entlang einer Richtung (z) angeordnet sind, die sich im Wesentlichen senkrecht zu der Richtung (x) erstreckt.

11. Vorrichtung (100) nach dem vorhergehenden Anspruch, **dadurch gekennzeichnet, dass** sie umfasst:
mindestens einen Förderer (101), der eingerichtet ist, Isolierglasscheiben (1) aus der Einfügungsvorrichtung (200) zu empfangen und der eingerichtet ist, entlang einer Richtung (x) bewegt zu werden;
mindestens ein Zubringungselement (120), das eingerichtet ist, Isolierglasscheiben (1) von dem mindestens einen Förderer (101) zu empfangen und das Speichermodul (140) zu beliefern, wobei das mindestens Zubringungselement (120) eingerichtet ist, sich vor den Scheibenmagazinen (141) entlang der Richtung (z) zu bewegen; und
mindestens einen Entnahmeförderer (101'), der eingerichtet ist, Isolierglasscheiben (1) von dem mindestens einen Zubringungselement (120) zu empfangen.

12. Vorrichtung (100) nach einem der vorhergehenden Ansprüche, **dadurch gekennzeichnet, dass** sie mindestens einen Entladeförderer (160) umfasst, der Haltemittel (400) aufweist, um die Trennmittel (201) von der Isolierglasscheibe (1) zu lösen, bevor diese von dem Förderer (160) entfernt wird.

13. Vorrichtung (100) nach dem vorhergehenden Anspruch, **dadurch gekennzeichnet, dass** die Haltemittel (400) mindestens eine parallele pneumatische Greifzange (402) umfassen, die eingerichtet ist, Backen (401) zu betätigen, um die Trennmittel (201) beim Anheben der Isolierglasscheibe (1) von den Trennmitteln (201) zu halten.

14. Vorrichtung (100) nach einem der vorhergehenden Ansprüche, **dadurch gekennzeichnet, dass** die Trennmittel (201) ein im Wesentlichen starres Element umfassen, das eingerichtet ist, wieder verwendet zu werden.

15. Vorrichtung (100) nach einem der vorhergehenden Ansprüche, **dadurch gekennzeichnet, dass** die Trennmittel (201) ein im Wesentlichen rechteckiges längliches Element (210) umfassen, das mit Trageinsätzen (211) angeordnet ist, die eingerichtet sind, mindestens eine Isolierglasscheibe (1) zu tragen.

16. Vorrichtung (100) nach dem vorhergehenden Anspruch, **dadurch gekennzeichnet, dass** das längliche Element (210) aus Polymermaterial, vorzugsweise PVC (Polyvinylchlorid), besteht und/oder dass die Trageinsätze (211) aus Polymermaterial, vorzugsweise Nitrilkautschuk (NBR), bestehen.

17. Vorrichtung (100) nach Anspruch 15, **dadurch gekennzeichnet, dass** das längliche Element (210) durch Kopplung zwei verschiedener Materialien hergestellt wird: eine untere Schicht mit hohem Reibungskoeffizienten, vorzugsweise Nitrilkautschuk, die obere Schicht aus einem Antihaftmaterial, vorzugsweise Teflon, wobei mehr vorzugsweise ein Einsatz zwischen den zwei Materialschichten angeordnet ist, der eingerichtet ist, den Trennmitteln (201) den notwendigen mechanischen Steifigkeitsmerkmalen der Trennmittel (201) zu verleihen.

18. Vorrichtung (100) nach einem der vorhergehenden Ansprüche, **dadurch gekennzeichnet, dass** sie Seitenräder (105, 106) für die seitliche Führung der Trennmittel (201) während des Durchgangs auf den Förderern (101, 101', 160) umfasst.

19. Vorrichtung (100) nach einem der vorhergehenden Ansprüche, **dadurch gekennzeichnet, dass** sie Mittel zum Aufbringen einer Antihaftsubstanz auf die Trennmittel (201) vor deren Verwendung umfasst.

20. Vorrichtung (100) nach einem der vorhergehenden Ansprüche, **dadurch gekennzeichnet, dass** sie eine programmierbare Steuereinheit (170) umfasst, die operativ mit den Steuerungen der Vorrichtung (100) verbunden ist, um die Bewegungen der jeweiligen Komponenten zu steuern.

21. Anlage, umfassend eine Produktionslinie (10) für Isolierglas (1) und eine Vorrichtung (100) zum Entladen von Isolierglasscheiben (1) aus einer Produktionslinie (10) nach einem der vorhergehenden Ansprüche.

22. Verfahren zum Entladen von Isolierglas (1) aus einer Produktionslinie (10), umfassend die folgenden Schritte:
(a) Bereitstellen einer Vorrichtung zum Entladen von Isolierglasscheiben aus einer Produktionslinie nach einem der Ansprüche 1 bis 18 ;
(b) Positionieren eines Trennmittels (201) oberhalb des Förderers (202) ;
(c) Voranbringen des Isolierglases (1) oberhalb der Trennmittel (201) ; und
(d) Voranbringen des Isolierglases (1), das von mindestens einem Trennmittel getragen wird, zu dem Förderer (101).

23. Verfahren zum Entladen von Isolierglasscheiben (1) aus einer Produktionslinie (10) nach dem vorhergehenden Anspruch, **dadurch gekennzeichnet, dass** es umfasst:
- einen Schritt (b') vor Schritt (b), in dem der Förderer (202) in die abgesenkte Einführstellung der Trennmittel (201) gebracht wird ; und
- einen Schritt (c') nach Schritt (c), in dem der Förderer (202) in seine Transportstellung angehoben wird, bis die Trennmittel (201) in Kontakt mit dem unteren Teil der Isolierglasscheibe (1) gebracht werden.

24. Verfahren zum Entladen von Isolierglasscheiben (1) aus einer Produktionslinie (10) nach einem der Ansprüche 22 bis 23, **dadurch gekennzeichnet, dass** während des Durchgangs der Isolierglasscheibe (1) auf dem Förderer (202) die Isolierglasscheibe durch die Kupplungsmittel (303) des Wagens (300) getragen wird.

25. Verfahren zum Entladen von Isolierglasscheiben (1) aus einer Produktionslinie (10) nach einem der Ansprüche 22 bis 24, **dadurch gekennzeichnet, dass** mindestens ein weiteres Trennmittel (201) zwischen den Förderer (202) und das Isolierglas (1) eingeführt wird durch Wiederholung der Schritte (b) und (c) sowie gegebenenfalls auch der Schritte (b') und (c').

26. Verfahren zum Entladen von Isolierglasscheiben (1) aus einer Produktionslinie (10) nach einem der Ansprüche 22 bis 25, **dadurch gekennzeichnet, dass** es einen Schritt des Aufbringens einer Antihaftsubstanz auf die Trennmittel (201) umfasst.

27. Verfahren zum Entladen von Isolierglasscheiben (1) aus einer Produktionslinie (10) nach einem der Ansprüche 22 bis 26, **dadurch gekennzeichnet, dass** es einen Schritt des Neuanordnens der Isolierglasscheiben (1) nach spezifischen Bedürfnissen umfasst.

28. Verfahren zum Entladen von Isolierglasscheiben (1) aus einer Produktionslinie (10) nach einem der Ansprüche 22 bis 27, **dadurch gekennzeichnet, dass** es einen Schritt umfasst, in dem die Isolierglasscheiben (1) in dem Speichermodul (140) verbleiben, bis die Scheiben für die nachfolgenden Schritte bereit sind und/oder versandbereit sind.

## Revendications

1. Appareil (100) pour décharger des panneaux de verre isolant (1) d'une chaîne de production (10), comprenant un dispositif d'insertion (200) disposé avec un convoyeur (202) apte à transporter des panneaux de verre isolant (1) selon une direction (x) d'une zone d'entrée proche d'une chaîne de production (10) vers une zone de sortie pour lesdits panneaux ; et une structure de support verticale (102) destinée à maintenir le verre isolant dans une position inclinée par rapport à la direction verticale ;
lequel dispositif d'insertion (200) comprend des moyens de séparation (201) positionnés au-dessus dudit convoyeur (202), de sorte qu'ils puissent être interposés entre lesdits panneaux de verre isolant (1) et ledit convoyeur (202).

2. Appareil (100) selon la revendication précédente, **caractérisé en ce qu'**il comprend un dispositif de positionnement (205) apte à positionner lesdits moyens de séparation (201) au-dessus dudit convoyeur (202).

3. Appareil (100) selon la revendication précédente, **caractérisé en ce que** ledit dispositif (200) comprend des moyens de manutention (204) pour ledit convoyeur (202) entre une position de transport pour lesdits panneaux et une position abaissée par rapport à la précédente, pour l'insertion desdits +moyens de séparation (201) au moyen dudit dispositif de positionnement (205).

4. Appareil (100) selon la revendication précédente, **caractérisé en ce que** lesdits moyens de manutention (204) comprennent un vérin électrique, électropneumatique, pneumatique, hydraulique et/ou combiné.

5. Appareil (100) selon l'une quelconque des revendications 2-4, **caractérisé en ce que** ledit dispositif de positionnement (205) comprend :
une plaque de support (212), sur laquelle une pluralité de moyens de séparation (201) peut être positionnée côte à côte et orientée sensiblement parallèlement à la direction de transit (x) desdits panneaux (1) ; et
- une plaque supérieure profilée (209) agencée avec au moins un siège longitudinal (214) faisant face à ladite plaque de support (212), apte à contenir au moins partiellement au moins un moyen de séparation (201), ladite plaque supérieure profilée (209) étant apte à être déplacée :
(a) plus près de et plus loin de ladite plaque de support (212) pour engager au moins un moyen de séparation (201) sur commande ; et
(b) dans une direction transversale au-dessus de ladite plaque de support (212), pour déplacer ledit au moins un moyen de séparation vers ledit convoyeur (202).

6. Appareil (100) selon la revendication précédente, **caractérisé en ce que** ledit dispositif de positionnement (205) comprend des moyens d'actionnement (207, 208) permettant les mouvements (a) et (b).

7. Appareil (100) selon l'une quelconque des revendications 2-6, **caractérisé en ce qu'**il comprend un chargeur automatique (203) apte à alimenter automatiquement le dispositif de positionnement (205) du dispositif d'insertion (200).

8. Appareil (100) selon la revendication précédente, **caractérisé en ce que** ledit chargeur automatique (203) comprend des moyens de manutention (206) comprenant une motorisation (218) reliée à un réducteur (219) qui entraîne une vis sans fin (220), apte à déplacer un support du chargeur (221) sur lequel des moyens de séparation (201) peuvent être empilés, de sorte que l'empilement de moyens de séparation (201) puisse être soulevé pour amener le suivant à la hauteur de la plaque de support (212) afin d'être translaté par le dispositif de positionnement (205).

9. Appareil (100) selon l'une quelconque des revendications précédentes, **caractérisé en ce que** ladite structure de support verticale (102) dudit dispositif d'insertion (200) comprend un chariot (300) avec des moyens de couplage (303), de préférence une pluralité de ventouses.

10. Appareil (100) selon l'une quelconque des revendications précédentes, **caractérisé en ce qu'**il comprend un module de stockage (140) pour lesdits panneaux de verre isolant (1) provenant dudit dispositif d'insertion (200), comprenant une pluralité de magasins de panneaux (141), disposés selon une direction (z) sensiblement perpendiculaire à ladite direction (x).

11. Appareil (100) selon la revendication précédente, **caractérisé en ce qu'**il comprend :
au moins un convoyeur (101) apte à recevoir des panneaux de verre isolant (1) dudit dispositif d'insertion (200) et apte à être déplacé selon une direction (x) ;
au moins une navette (120) apte à recevoir des panneaux de verre isolant (1) dudit au moins un convoyeur (101) et à desservir ledit module de stockage (140), ladite au moins une navette (120) étant apte à se déplacer devant lesdits magasins de panneaux (141) le long de la direction (z) ; et
au moins un convoyeur de retrait (101') apte à recevoir des panneaux de verre isolant (1) dudit au moins une navette (120).

12. Appareil (100) selon l'une quelconque des revendications précédentes, **caractérisé en ce qu'**il comprend au moins un convoyeur de déchargement (160) comprenant des moyens de retenue (400) pour détacher les moyens de séparation (201) du panneau de verre isolant (1) avant son retrait du convoyeur (160).

13. Appareil (100) selon la revendication précédente, **caractérisé en ce que** lesdits moyens de retenue (400) comprennent au moins une pince pneumatique parallèle (402) apte à actionner des mâchoires (401) pour retenir les moyens de séparation (201) lors du levage du panneau de verre isolant (1) desdits moyens de séparation (201).

14. Appareil (100) selon l'une quelconque des revendications précédentes, **caractérisé en ce que** lesdits moyens de séparation (201) comprennent un élément sensiblement rigide apte à être réutilisé.

15. Appareil (100) selon l'une quelconque des revendications précédentes, **caractérisé en ce que** lesdits moyens de séparation (201) comprennent un élément allongé sensiblement rectangulaire (210) disposé avec des inserts de support (211) aptes à supporter au moins un panneau de verre isolant (1).

16. Appareil (100) selon la revendication précédente, **caractérisé en ce que** ledit élément allongé (210) est réalisé en matériau polymère, de préférence en PVC (polychlorure de vinyle), et/ou **en ce que** lesdits inserts de support (211) sont réalisés en matériau polymère, de préférence en caoutchouc nitrile (NBR).

17. Appareil (100) selon la revendication 15, **caractérisé en ce que** ledit élément allongé (210) est réalisé par couplage de deux matériaux différents : une couche inférieure avec un coefficient de friction élevé, de préférence en caoutchouc nitrile, la couche supérieure en matériau antiadhérent, de préférence en téflon, encore plus préférablement un insert étant interposé entre les deux couches de matériau, apte à conférer les caractéristiques nécessaires de rigidité mécanique aux moyens de séparation (201).

18. Appareil (100) selon l'une quelconque des revendications précédentes, **caractérisé en ce qu'**il comprend des roues latérales (105, 106) pour le guidage latéral des moyens de séparation (201) pendant leur transit sur les convoyeurs (101, 101', 160).

19. Appareil (100) selon l'une quelconque des revendications précédentes, **caractérisé en ce qu'**il comprend des moyens pour l'application d'une substance antiadhérente sur lesdits moyens de séparation (201) avant leur utilisation.

20. Appareil (100) selon l'une quelconque des revendications précédentes, **caractérisé en ce qu'**il comprend une unité de commande programmable (170), connectée opérationnellement aux entraînements de l'appareil (100) pour la gestion des mouvements des composants relatifs.

21. Installation comprenant une chaîne de production (10) de verre isolant (1) et un appareil (100) pour décharger des panneaux de verre isolant (1) d'une chaîne de production (10) selon l'une quelconque des revendications précédentes.

22. Processus pour décharger du verre isolant (1) d'une chaîne de production (10), comprenant les étapes de :
(a) fournir un appareil pour décharger des panneaux de verre isolant d'une chaîne de production selon l'une quelconque des revendications 1-18 ;
(b) positionner un moyen de séparation (201) au-dessus dudit convoyeur (202) ;
(c) faire avancer le verre isolant (1) au-dessus des moyens de séparation (201) ; et
(d) faire avancer le verre isolant (1) supporté par au moins un moyen de séparation vers les convoyeurs (101).

23. Processus pour décharger des panneaux de verre isolant (1) d'une chaîne de production (10), selon la revendication précédente, **caractérisé en ce qu'**il comprend :
- une étape (b') avant l'étape (b) dans laquelle le convoyeur (202) est positionné dans la position abaissée d'insertion desdits moyens de séparation (201) ; et
- une étape (c') après l'étape (c), dans laquelle le convoyeur (202) est relevé à sa position de transport jusqu'à ce que les moyens de séparation (201) soient amenés en contact avec la partie inférieure du panneau de verre isolant (1).

24. Processus pour décharger des panneaux de verre isolant (1) d'une chaîne de production (10) selon l'une quelconque des revendications 22-23, **caractérisé en ce que**, durant le transit du panneau de verre isolant (1) sur le convoyeur (202), le panneau de verre isolant est supporté par les moyens de couplage (303) du chariot (300).

25. Processus pour décharger des panneaux de verre isolant (1) d'une chaîne de production (10) selon l'une quelconque des revendications 22-24, **caractérisé en ce qu'**au moins un autre moyen de séparation (201) est inséré entre le convoyeur (202) et le verre isolant (1) par la répétition des étapes (b) et (c), et éventuellement aussi des étapes (b') et (c').

26. Processus pour décharger des panneaux de verre isolant (1) d'une chaîne de production (10) selon l'une quelconque des revendications 22-25, **caractérisé en ce qu'**il comprend une étape d'application d'une substance antiadhérente sur les moyens de séparation (201).

27. Processus pour décharger des panneaux de verre isolant (1) d'une chaîne de production (10) selon l'une quelconque des revendications 22-26, **caractérisé en ce qu'**il comprend une étape de réorganisation des panneaux de verre isolant (1) selon des besoins spécifiques.

28. Processus pour décharger des panneaux de verre isolant (1) d'une chaîne de production (10) selon l'une quelconque des revendications 22-27, **caractérisé en ce qu'**il comprend une étape dans laquelle les panneaux de verre isolant (1) demeurent dans ledit module de stockage (140) jusqu'à ce que les panneaux soient prêts pour les étapes suivantes et/ou pour l'expédition.
